# EUROPEAN PATENT APPLICATION

(11) **EP 3 079 048 A1**
(43) Date of publication of application: **12.10.2016**
(21) Application number: 14795060.4
(22) Date of filing: 09.06.2014
(51) Int. Cl.: G06F 3/048

(54) **SCENE MODE SWITCHING METHOD, DEVICE AND MOBILE TERMINAL**

(30) Priority: 03.12.2013 CN 201310642525
(71) Applicant: ZTE Corporation, Shenzhen, Guangdong 518057 (CN)
(72) Inventor: ZHU, Haiyan, Shenzhen Guangdong 518057 (CN)
(74) Representative: Carangelo, Pierluigi
(86) International application number: PCT/CN2014/079536
(87) International publication number: WO 2014/180432

(57) **Abstract**

Provided are a method and device for switching a scene mode, and a mobile terminal. According to the method, a first instruction for instructing a mobile terminal to switch a scene mode of the mobile terminal to a black screen mode is received, wherein the black screen mode includes that a display screen is in a black screen state, an audio output is in a muted state, responses to specific operations to the mobile terminal are shielded, wherein the specific operations include all operations except at least one preset operation for switching the scene mode of the mobile terminal from the black screen mode to a non-black screen mode; the scene mode of the mobile terminal is switched from the non-black screen mode to the black screen mode according to the first instruction. A scene mode disabling a mobile terminal from responding to most external random operations is provided, thereby solving a problem caused by the fact that the related art has not yet been able to provide a scene mode disabling a mobile terminal from responding to most external random operations.

## Description

### Technical Field

The present disclosure relates to the field of communications, particularly to a method and device for switching a scene mode, and a mobile terminal.

### Background

Mobile electronic devices, including mobile phones, tablet computers and so on, have become popularized rapidly and have more and more powerful functions in recent years with the rapid development of mobile communications technologies. Electronic devices, including mobile phones and tablet computers and so on having a touch function, have gradually become a mainstream of development because of their good user experience and stylish appearances to attract not only adults, but also children. However, eyes of children with little or even no self-control are still growing, and eye growth will be affected easily by playing electronic devices for a long period of time or playing the electronic devices usually. Apart from the negative effect in the aspect of eye growth, interference will also be brought to study.

A screen locking mode of an existing mobile electronic device with a touch function in the related art is provided for an adult, and a screen of the device that is not used for a period of time is locked. Moreover, a screen lock interface can still be displayed when the screen is locked, and an unlocking method is simple, thus the screen is easy to unlock. For example, an existing Android mobile phone enters a black screen by pressing a power-on button, and is easy to exit the black screen by pressing another button. Therefore, although a screen lock state is provided to the existing mobile electronic device to make it more difficult for a child to enter a normal interface of the electronic device, the child, who is extremely curious and lack of self-control, still wants to play, while an existing unlocking technology is still simple and the electronic device can be unlocked easily. Even password unlocking will still bring great curiosity to the child who will not give up, thus the child will continue to play the electronic device on hands. Operations of the child on the mobile electronic device are generally some disordered random operations. Thus, it is necessary to provide a scene mode disabling a mobile terminal from responding to most external random operations.

However, there is not effective solution at present yet to solve a problem caused by the fact that the related art has not yet been able to provide a scene mode disabling a mobile terminal from responding to most external random operations.

### Summary

The embodiments of the present disclosure provide a method and device for switching a scene mode, and a mobile terminal, so as to at least solve the problem above.

A method for switching a scene mode is provided according to an aspect of embodiments of the present disclosure, including that: a first instruction for instructing a mobile terminal to switch a scene mode of the mobile terminal to a black screen mode is received, wherein the black screen mode includes that a display screen is in a black screen state, an audio output is in a muted state, and responses to specific operations to the mobile terminal are shielded, wherein the specific operations include all operations except at least one preset operation for switching the scene mode of the mobile terminal from the black screen mode to a non-black screen mode; and the scene mode of the mobile terminal is switched from the non-black screen mode to the black screen mode according to the first instruction.

In an exemplary embodiment, after the scene mode of the mobile terminal is switched to the black screen mode, the method may further include that: a second instruction for instructing the mobile terminal to switch out of the black screen mode is received; and whether the second instruction is the same as any one of the at least one preset operation for switching the scene mode of the mobile terminal from the black screen mode to the non-black screen mode is judged, and when the second instruction is the same as any one of the at least one preset operation, the scene mode of the mobile terminal is switched from the black screen mode to the non-black screen mode.

In an exemplary embodiment, the at least one preset operation for switching the scene mode of the mobile terminal from the black screen mode to the non-black screen mode may include at least one of the followings: an instruction inputted by a physical button and/or a touch button of the mobile terminal, wherein the specific operations include: combined use of the physical button and/or the touch button; an inductive signal of a specific characteristic, which is received by a sensor of the mobile terminal; and an incoming call from a preset number, or an incoming message.

In an exemplary embodiment, in a case that the at least one preset operation for switching the scene mode of the mobile terminal from the black screen mode to the non-black screen mode includes the incoming call from the preset number or the incoming message, the method may further include that an incoming calling and/or message service of the mobile terminal in the black screen mode are/is monitored; and in a case that the mobile terminal has the incoming call and/or message service, the scene mode of the mobile terminal is switched from the black screen mode to the non-black screen mode.

In an exemplary embodiment, before the scene mode of the mobile terminal is switched from the non-black screen mode to the black screen mode, the method may further include that an original state of the mobile terminal in the non-black screen mode is stored.

In an exemplary embodiment, the original state may include at least one of the followings: an audio setting in the non-black screen mode; and a display screen setting in the non-black screen mode.

In an exemplary embodiment, switching the scene mode of the mobile terminal from the black screen mode to the non-black screen mode may include that the original state of the mobile terminal in the non-black screen mode is acquired; and the mobile terminal is switched to the original state of the mobile terminal in the non-black screen mode.

A device for switching a scene mode is further provided according to another aspect of the embodiments of the present disclosure, including: a receiving component, configured to receive a first instruction for instructing a mobile terminal to switch a scene mode of the mobile terminal to a black screen mode, wherein the black screen mode includes that a display screen is in a black screen state, an audio output is in a muted state, and responses to specific operations to the mobile terminal are shielded, wherein the specific operations include all operations except at least one preset operation for switching the scene mode of the mobile terminal from the black screen mode to a non-black screen mode; and a switching component, configured to switch the scene mode of the mobile terminal from the non-black screen mode to the black screen mode according to the first instruction.

In an exemplary embodiment, the device may further include: a monitoring component, configured to monitor an incoming calling and/or message service of the mobile terminal in the black screen mode; and a second switching component configured to, in a case that the mobile terminal has the incoming call and/or message service, switch the scene mode of the mobile terminal from the black screen mode to the non-black screen mode.

A mobile terminal is further provided according to still another aspect of the embodiments of the present disclosure, including: a black screen mode which is set in a scene mode of the mobile terminal, wherein the black screen mode includes that: a display screen is in a black screen state, an audio output is in a muted state, and responses to specific operations to the mobile terminal are shielded, wherein the specific operations include all operations except at least one preset operation for switching the scene mode of the mobile terminal from the black screen mode to a non-black screen mode.

By means of the embodiments of the present disclosure, a first instruction for instructing a mobile terminal to switch a scene mode of the mobile terminal to a black screen mode is received, wherein the black screen mode includes that a display screen is in a black screen state, an audio output is in a muted state, responses to specific operations to the mobile terminal are shielded, wherein the specific operations include all operations except at least one preset operation for switching the scene mode of the mobile terminal from the black screen mode to a non-black screen mode; the scene mode of the mobile terminal is switched from the non-black screen mode to the black screen mode according to the first instruction, thus solving a problem caused by the fact that the related art has not yet been able to provide a scene mode disabling a mobile terminal from responding to most external random operations and providing a scene mode disabling a mobile terminal from responding to most external random operations.

### Brief Description of the Drawings

The accompanying drawings illustrated herein are used for providing further understanding to the present disclosure and form a part of the present application. The schematic embodiments of the present disclosure and description thereof are used for explaining the present disclosure, instead of forming improper limitation thereto. In the accompanying drawings:
Fig. 1 is a flowchart of a method for switching a scene mode according to an embodiment of the present disclosure;
Fig. 2 is a structural diagram of a device for switching a scene mode according to an embodiment of the present disclosure;
Fig. 3 is a schematic diagram of an implementation structure of a black screen mode of an electronic device according to an exemplary embodiment of the present disclosure;
Fig. 4 is a flowchart of setting a black screen mode according to an exemplary embodiment of the present disclosure; and
Fig. 5 is a working flowchart of a black screen mode according to an exemplary embodiment of the present disclosure.

### Detailed Description of the Embodiments

It needs to be noted that the embodiments in the present application and the characteristics in the embodiments may be combined with each other if there is no conflict. The present disclosure will be expounded hereinafter with reference to the accompanying drawings and in combination with the embodiments.

The steps illustrated in the flowcharts of the accompanying drawings may be executed in computer system, such as a group of computer executable instructions. Furthermore, although logical sequences have been illustrated in the flowcharts, the steps as illustrated or described may be executed according to sequences different from those herein in some cases.

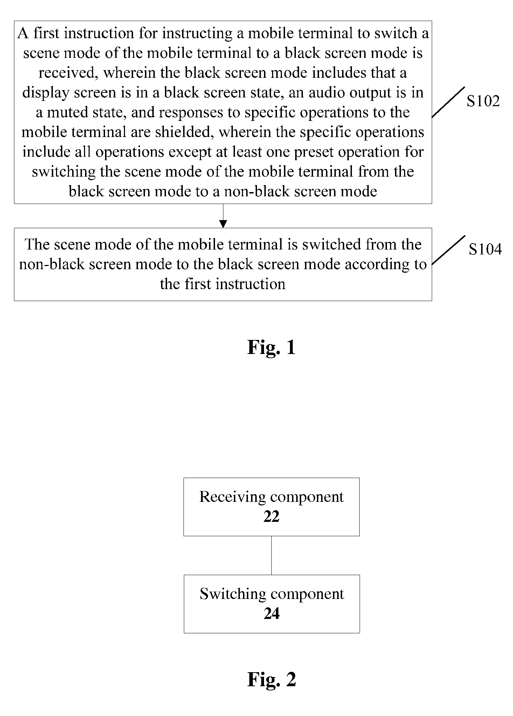

The present embodiment provides a scene switching method. Fig. 1 is a flowchart of a method for switching a scene mode according to an embodiment of the present disclosure. As shown in Fig. 1, the flow includes the following steps.

Step S102: A first instruction for instructing a mobile terminal to switch a scene mode of the mobile terminal to a black screen mode is received, wherein the black screen mode includes that a display screen is in a black screen state, an audio output is in a muted state, and responses to specific operations to the mobile terminal are shielded, wherein the specific operations include all operations except at least one preset operation for switching the scene mode of the mobile terminal from the black screen mode to a non-black screen mode.

Step S104: The scene mode of the mobile terminal is switched from the non-black screen mode to the black screen mode according to the first instruction.

By means of the steps above, a scene mode of a mobile terminal is switched to a black screen mode in which a display screen of the mobile terminal is in a black screen state, an audio output is in a muted state, and responses to specific operations to the mobile terminal are shielded, wherein the specific operations include all operations except at least one preset operation for switching the scene mode of the mobile terminal from the black screen mode to a non-black screen mode, so that the mobile terminal will not respond to most random operations of a physical button and/or a touch button, thus providing a scene mode disabling a mobile terminal from responding to most external random operations and solving a problem caused by the fact that the related art has not yet been able to provide a scene mode disabling a mobile terminal from responding to most external random operations.

In the embodiment, the operation for switching the scene mode of the mobile terminal from the black screen mode to the non-black screen mode may be one or more methods defined by a user. The specific operations may include all operations except the one or more methods defined by the user.

A method for switching the scene mode from the black screen mode to the non-black screen mode is further provided in the present embodiment. In an exemplary embodiment, after the scene mode of the mobile terminal is switched to the black screen mode, in a case that the mobile terminal in the black screen mode receives a second instruction triggered by an operation of the user on the mobile terminal, the mobile terminal first judges whether the second instruction is the same as any one of the at least one preset operation for switching the scene mode of the mobile terminal from the black screen mode to the non-black screen mode, and when the second instruction is the same as any one of the at least one preset operation, the scene mode of the mobile terminal is switched from the black screen mode to the non-black screen mode.

In an exemplary embodiment, the at least one preset operation for switching the scene mode of the mobile terminal from the black screen mode to the non-black screen mode may include at least one of the followings:
(1) an instruction inputted by a physical button and/or a touch button of the mobile terminal, for example, a default setting method may be a long press on a power-off button, and whether the black screen mode is entered or exited is selected in a mode menu; a shortcut button may be further set, for example, the black screen mode may be entered or exited by pressing the power-off button long while conducting a zoom in operation on a touch screen with two fingers and so on;
(2) an inductive signal of a specific characteristic, which is received by a sensor of the mobile terminal, for example, a sound sensor receives specific voice information of the user to enter or exit the black screen mode, or a gravity sensor receives a inductive signal of the mobile terminal representing a motion state of the mobile terminal, and so on;
(3) an incoming call from a preset number, or an incoming message; the preset number may be a fixed number preset by the user; when the fixed number calls, the mobile terminal enters the black screen mode, or when the fixed number calls, the mobile terminal exits the black screen mode; similarly, the mobile terminal may be also set to enter or exit the black screen mode according to a text message, a multimedia message and so on transmitted by the fixed number and received by the terminal, or information having a preset format or carrying a preset instruction.

In some embodiments, the black screen mode may be entered or exited by applying the same operation or may be also entered or exited by applying different operations, which may be selected as required.

A monitoring function may be started after the mobile terminal enters the black screen mode, so as to enable the mobile terminal to input the second instruction through a specific operation of the physical button and/or the touch button so as to switch out of the black screen mode. For example, a monitoring component, which operates in the background of the mobile terminal, only transmits the second instruction consisting with a rule to a control center of the mobile terminal, and shields other instructions inconsistent with the rule to block execution of the instructions.

Answering an incoming call is a basic function as well as a function having the highest priority of the mobile terminal, and implementation of the basic function of the mobile terminal should be ensured even if the mobile terminal is in the black screen mode. Therefore, in this exemplary embodiment, a solution for executing the basic function normally in the black screen mode is provided. In another exemplary embodiment, a mechanism for temporarily exiting the black screen mode is also provided. For example, an operation of exiting the black screen mode further includes the incoming call from the preset number of the incoming message. In this case, the mobile terminal in the black screen mode monitors an incoming calling and/or message service, and in a case that the mobile terminal has the incoming call and/or message service, the scene mode of the mobile terminal is switched from the black screen mode to the non-black screen mode.

In an exemplary embodiment, after the user terminates the call or reads the received information, the scene is switched to the black screen mode again immediately or after a period of time.

In an exemplary embodiment, an original state of the mobile terminal in the non-black screen mode may be stored before the mobile terminal is switched into the black screen mode so that a state of the mobile terminal is recovered to the original state in the non-black screen mode when the black screen mode is exited, such as an audio setting (e.g. a volume level) in the non-black screen mode, a display screen setting (e.g. a backlight level and a screen timeout) in the non-black screen mode.

In an exemplary embodiment, the original state of the mobile terminal before entering the black screen mode is acquired first when the scene mode of the mobile terminal is switched from the black screen mode to the non-black screen mode, and each state of the mobile terminal is switched to the original state.

The present embodiment further provides a device for switching a scene mode. The device is configured to implement the method for switching a scene mode. A specific implementation process of the device described in a device embodiment has been expounded in a method embodiment and will not be described repeatedly herein.

Fig. 2 is a structural diagram of a device for switching a scene mode according to an embodiment of the present disclosure. As shown in Fig. 2, the device includes: a receiving component 22 and a switching component 24, wherein the receiving component 22 is configured to receive a first instruction for instructing a mobile terminal to switch a scene mode of the mobile terminal to a black screen mode, wherein the black screen mode includes that a display screen is in a black screen state, an audio output is in a muted state, and responses to specific operations to the mobile terminal are shielded, wherein the specific operations include all operations except at least one preset operation for switching the scene mode of the mobile terminal from the black screen mode to a non-black screen mode; and the switching component 24 is coupled to the receiving component 22 and configured to switch the scene mode of the mobile terminal from the non-black screen mode to the black screen mode according to the first instruction.

The components and elements involved in the embodiments of the present disclosure may be implemented by means of software, and may be also implemented by means of hardware. The components and elements described in the present embodiment may be also arranged in a processor. For example, it may be described as follows: a processor, including a receiving component 22 and a switching component 24, wherein the names of these components do not form limitation to the components themselves in some cases. For example, the receiving component 22 may be also described as "a component for receiving a first instruction for instructing a mobile terminal to switch a scene mode of the mobile terminal to a black screen mode".

In an exemplary embodiment, the device may further include: a second receiving component, configured to receive a second instruction for instructing the mobile terminal to switch out of the black screen mode, and a second switching component, coupled to the second receiving component, and configured to judge whether the second instruction is the same as any one of the at least one preset operation for switching the scene mode of the mobile terminal from the black screen mode to the non-black screen mode, and when the second instruction is the same as any one of the at least one preset operation, switch the scene mode of the mobile terminal from the black screen mode to the non-black screen mode.

In an exemplary embodiment, the first receiving component 22 and the second receiving component may be the same component or different components, and the first switching component 24 and the second switching component may be also the same component or different components.

In an exemplary embodiment, the at least one preset operation for switching the scene mode of the mobile terminal from the black screen mode to the non-black screen mode may include at least one of the followings: an instruction inputted by a physical button and/or a touch button of the mobile terminal; an inductive signal of a specific characteristic, which is received by a sensor of the mobile terminal; and an incoming call from a preset number, or an incoming message.

In an exemplary embodiment, the device may further include a monitoring component, coupled to the first switching component 24, and configured to monitor, in a case that the at least one preset operation for switching the scene mode of the mobile terminal from the black screen mode to the non-black screen mode includes the incoming call from the preset number or the incoming message, an incoming calling and/or message service of the mobile terminal in the black screen mode, wherein the second switching component is coupled to the monitoring component and further configured to switch, in a case that the monitoring component monitors that the mobile terminal has the incoming call and/or message service, the scene mode of the mobile terminal from the black screen mode to the non-black screen mode.

In an exemplary embodiment, the device may further include: a storing component, coupled with the first receiving component 22 and the second switching component respectively and configured to store an original state of the mobile terminal in the non-black screen mode.

In an exemplary embodiment, the original state of the mobile terminal in the non-black screen mode may include at least one of the followings: an audio setting in the non-black screen mode; and a display screen setting in the non-black screen mode.

In an exemplary embodiment, the second switching component may include: an acquiring element, configured to acquire the original state of the mobile terminal in the non-black screen mode; and a switching element, coupled to the acquiring element and configured to switch the mobile terminal to the original state of the mobile terminal in the non-black screen mode.

The present embodiment further provides a mobile terminal. The mobile terminal is configured to implement the method above, wherein a black screen mode is set in a scene mode of the mobile terminal, wherein the black screen mode includes that: a display screen is in a black screen state, an audio output is in a muted state, and responses to specific operations to the mobile terminal are shielded, wherein the specific operations include all operations except at least one preset operation for switching the scene mode of the mobile terminal from the black screen mode to a non-black screen mode.

Description and illustration will be provided below in combination with an exemplary embodiment.

The present exemplary embodiment provides a black screen mode of a mobile electronic device, relating to the field of mobile electronic devices having a black screen mode mechanism, particularly to mobile electronic devices having a touch function, such as mobile phones and PADs and so on, and aiming at providing a black screen mode of a mobile electronic device to solve the disadvantage that a current mobile electronic device does not have a black screen mode.

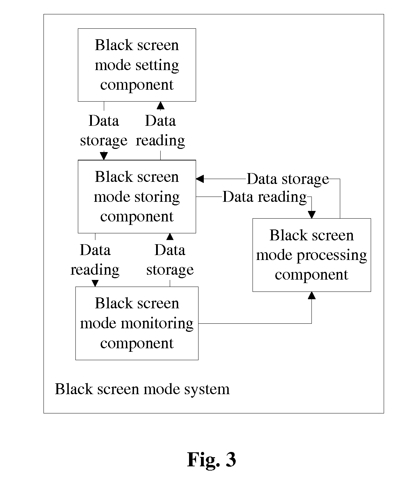

Fig. 3 is a schematic diagram of an implementation structure of a black screen mode of an electronic device according to an exemplary embodiment of the present disclosure. As shown in Fig. 3, the involved components include: a setting component of the black screen mode (black screen mode setting component), a storing component of the black screen mode (black screen mode storing component), a monitoring component of the black screen mode (black screen mode monitoring component) and a processing component of the black screen mode (black screen mode processing component). The monitoring component of the device system is configured to perform, for the electronic device, system control on starting and exiting operations set by a user, when identifying that an operation of the user is to start the black screen mode, switch the electronic device to a state of the black screen mode, and when the system identifies that an operation of the user is to exit the state of the black screen mode, control the system to exit the state of the black screen mode.

In an exemplary embodiment, the black screen mode provided in the exemplary embodiment of the present disclosure is activated or deactivated when being triggered initiatively by the user, and there may be no time limitation. The black screen mode is a mode similar to a standard mode, a muted mode, a conference mode, and an outdoor mode among scene modes on a mobile phone. In an exemplary embodiment, there are many methods to activate and deactivate the black screen mode in the present exemplary embodiment, and the user has many choices to set the black screen mode as required besides default entering and exiting methods.

The present exemplary embodiment will be described below in combination with a working process of the black screen mode.

A method for implementing a black screen mode of a mobile electronic device is provided in the present exemplary embodiment, and applied in a mobile terminal having a touch screen.

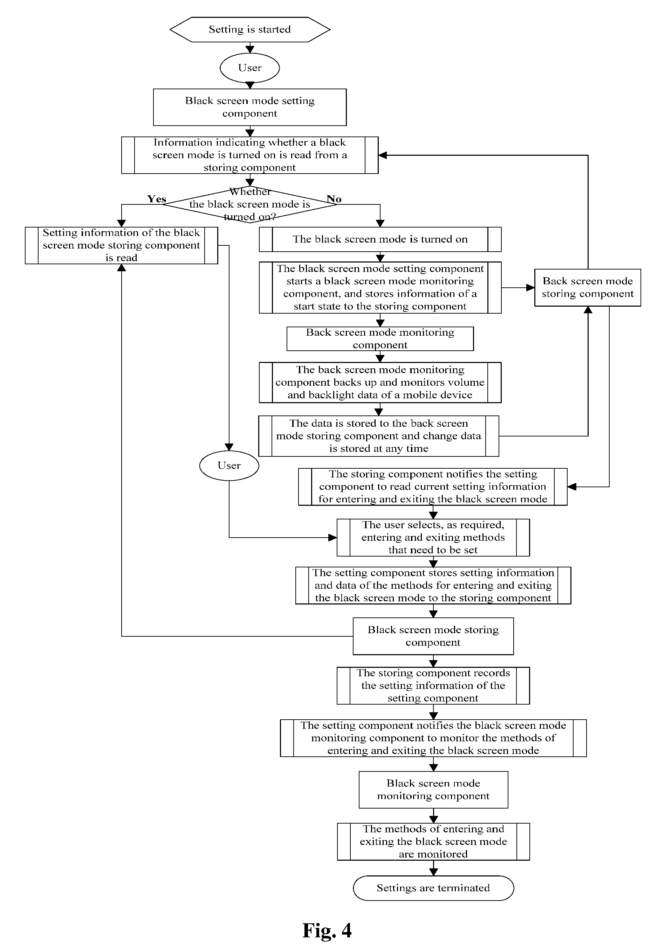

Fig. 4 is a flowchart of setting a black screen mode according to an exemplary embodiment of the present disclosure. As shown in Fig. 4, the flow includes the following steps.
Step A: Methods for entering and exiting the black screen mode are set. In an exemplary embodiment, the entering and exiting methods are not limited in the present exemplary embodiment. There may be many methods in a setting component for a user to select. For example, the entering and exiting methods may be related combinations of a button, a sensor and a gesture on a touch screen and may be also an incoming call of a fixed number, and may be also a text message of a specific content of a fixed number. After the user sets the exiting method, a black screen mode processing component determines, after automatically detecting the exiting method set by the user, that responses to other operations to the terminal except the exiting method set by the user will be shielded in the black screen mode.

In an exemplary embodiment, a default entering method may be a long press on a power-off button and a selection of the black screen mode in a mode menu. In an exemplary embodiment, a default exiting method may include long pressing the power-off button while conducting a zoom in operation on the touch screen by two fingers.

The user enters the black screen mode setting component to set whether the black screen mode is turned on, the entering method and the exiting method, and stores set data in a black screen mode storing component.

The setting component reads information indicating whether the black screen mode is turned on from the storing component, and if the black screen mode is turned on for the first time, starts a black screen mode monitoring component at the same time. The black screen storing component notifies a black screen mode control component to turn on the black screen mode, and Step B is performed. If the black screen mode has been turned on last time, Step B is performed directly.

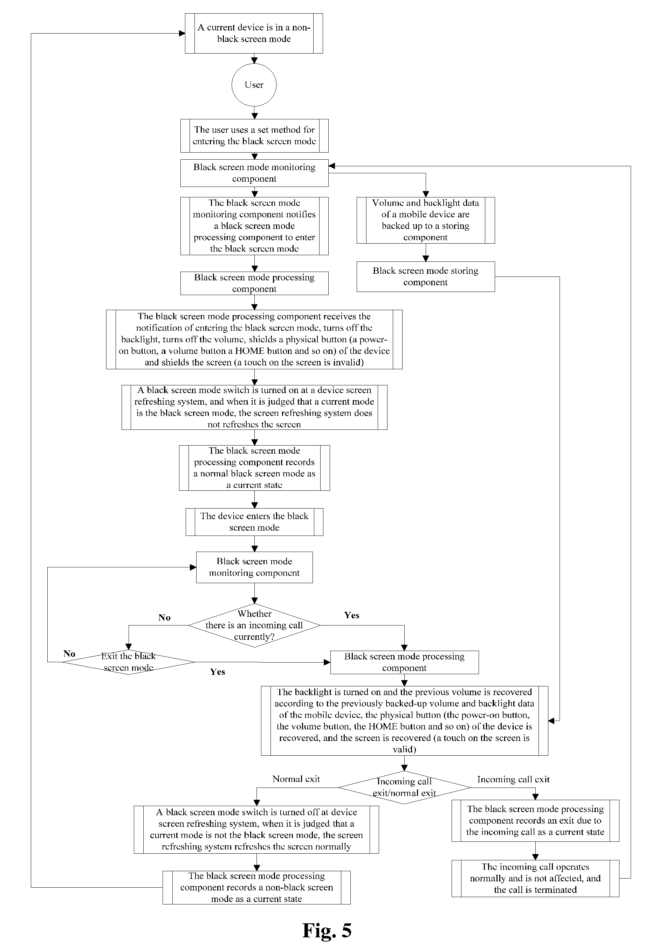

Fig. 5 is a working flowchart of a black screen mode according to an exemplary embodiment of the present disclosure. As shown in Fig. 5, the flow preferably includes the following steps.
Step B: A current device is in a non-black screen mode, the black screen mode monitoring component reads black screen mode storing component-stored method for entering the black screen mode, and monitors whether a state of the current device has a condition of entering the black screen mode. When the user operates the set method of entering the black screen mode, i.e. the condition is satisfied, the monitoring component first records a current volume and backlight brightness state information of the device and stores the same to the black screen mode storing component while starting the black screen mode processing component and notifying the black screen mode processing component to enter the black screen mode.
Step C: The black screen mode processing component receives the notification of entering the black screen mode, turns off backlight, turns off the volume, and determines, according to the exiting method stored in the black screen mode storing component, operations that need to be shielded, thus shielding a corresponding physical button (a power-on button, a volume button, a HOME button and so on) of the device and/or shielding a screen (a touch on the screen is invalid) and so on. When a device screen refreshing system turns on the black screen mode, and it is judged that the black screen mode is turned on currently, the screen refreshing system does not refresh the screen, the black screen mode processing component records that a current state is a normal black screen mode, and stores the current state in the black screen mode storing component.
Step D: The black screen mode monitoring component monitors information of an incoming call. When there is an incoming call, the black screen mode monitoring component notifies the black screen mode processing component to exit the black screen mode (recover the volume, the button and the screen), and incoming call is normal and not affected. The black screen mode processing component records an exit due to the incoming call as a current state is, and stores the same to the black screen mode storing component. When the incoming call is terminated at the moment, the black screen mode monitoring component backs up the volume and backlight data of the mobile device to the storing component, and notifies the black screen mode processing component to recover the black screen mode (turn off the backlight, turn off the volume, shield the physical button and the screen of the device) because the incoming call is terminated. The black screen mode processing component records a normal black screen mode as current state, and stores the current state to the black screen mode storing component.
Step E: The black screen mode monitoring component monitors a condition of exiting the black screen mode, and when the condition is satisfied, the black screen mode monitoring component notifies the black screen mode processing component to exit the black screen mode (recover the volume, the button and the screen). The black screen mode processing component turns off a black screen mode switch at the screen refreshing system and notifies the screen refreshing system to refresh the screen. The black screen mode processing component records a non-black screen mode as a current state, and stores the current state to the black screen mode storing component.
Step F: The current device is in the black screen mode, and a response is made when the user operates the set method of exiting the black screen mode. For example, the black screen mode monitoring component reads the previously backed-up volume and backlight data of the mobile device from the storing component, and notifies the black screen mode processing component to exit the black screen mode.
Step G: The black screen mode processing component receives the notification of exiting the black screen mode, and turns on the backlight, recovers the previous volume, recovers the physical button of the device (the power-on button, the volume button, the HOME button and so on) and the screen (a touch on the screen is valid) according to the previously backed-up volume and backlight data of the mobile device, turns off a black screen mode switch at the device screen refreshing system and judges that a current mode is not the black screen mode. The screen refreshing system refreshes the screen normally. The black screen mode processing component records the non-black screen mode as a current state and stores the same to the black screen mode storing component.
Step H: Step B is performed again.

It can be concluded that the black screen mode of the mobile electronic device according to an exemplary embodiment of the present disclosure enables a temporary muted and black screen state of the mobile electronic device, and a black screen cannot be exit by a non-preset exiting method, including a common button, a slide on the screen and so on, so that those extremely curious children with little self-control will lose interest on the electronic product, thus greatly helping parents to protect the eyesight and healthy study of the children. On the other hand, the solution of the present exemplary embodiment may be also applied to privacy protection, and when the user does not want others to see the contents shown in the mobile device, the device may be set to the black screen mode, thus protecting user privacy.

Existing screen locking methods include pattern lock and password lock. A black screen mode of a mobile electronic device is supplementary to the existing screen locking types. There may be various methods for entering and exiting the black screen mode provided in the present exemplary embodiment to be selected by the user, such as any combination of several elements including a button, a sensor, a touch screen and a duration, an incoming call of a fixed number, a fixed text message content and so on.

For example, any of the followings may serve as an entering or exiting condition: long pressing the power-on button while conducting a zoom out operation on the screen; long pressing the volume button while conducting a zoom out operation on the screen; long pressing the power-on button while conducting a zoom in operation on the screen; long pressing the volume button while conducting a zoom in operation on the screen; long pressing the power-on button while double-clicking the screen; long pressing the volume button while double-clicking the screen; long pressing the HOME button while conducting a zoom out operation on the screen; long pressing the HOME button while conducting a zoom in operation on the screen; long pressing the HOME button while double-clicking the screen; long pressing the power-on button and the volume button while conducting a zoom out operation on the screen; long pressing the power-on button and the volume button while conducting a zoom in operation on the screen; long pressing the power-on button and the volume button while double-clicking the screen; long pressing the power-on button and the volume button while shaking the mobile terminal for N times; long pressing the power-on button and the volume button for more than N seconds; long pressing the HOME button and the volume button while conducting a zoom out operation on the screen; long pressing the HOME button and the volume button while conducting a zoom in operation on the screen; long pressing the HOME button and the volume button while double-clicking the screen; long pressing the HOME button and the volume button while shaking the mobile terminal for N times; long pressing the HOME button and the volume button for more than N seconds; long pressing the HOME button and the power-on button while conducting a zoom out operation on the screen; long pressing the HOME button and the power-on button while conducting a zoom in operation on the screen; long pressing the HOME button and the power-on button while double-clicking the screen; long pressing the HOME button and the power-on button while shaking the mobile terminal for N times; long pressing the HOME button and the power-on button for more than N seconds and so on, and any other combination of several elements including a button, a sensor, the touch screen and a duration.

In an exemplary embodiment, in a case that a fixed text message is received to enter or exit the black screen mode, a content of the text message is the same as a preset content. In an exemplary embodiment, in a case that a fixed number calls to enter or exit the black screen mode, the number is a preset number.

It can be learned from the description above that the black screen mode of the mobile electronic device according to the present exemplary embodiment can enable the mobile electronic device to be in the temporary black screen mode as required at any time, and it is not easy to exit the black screen mode by a non-preset exiting method including a common button, a slide and so on. Thus, those extremely curious children with little self-control will lose interest on the electronic product and turn to another object of interest, thereby parents can keep the children away from the mobile electronic device.

### Industrial Applicability

By means of the embodiments of the present disclosure, a first instruction for instructing a mobile terminal to switch a scene mode of the mobile terminal to a black screen mode is received, wherein the black screen mode includes that a display screen is in a black screen state, an audio output is in a muted state, responses to specific operations to the mobile terminal are shielded, wherein the specific operations include all operations except at least one preset operation for switching the scene mode of the mobile terminal from the black screen mode to a non-black screen mode; the scene mode of the mobile terminal is switched from the non-black screen mode to the black screen mode according to the first instruction, thus solving a problem caused by the fact that the related art has not yet been able to provide a scene mode disabling a mobile terminal from responding to most external random operations and providing a scene mode disabling a mobile terminal from responding to most external random operations.

Obviously, it should be understood by those skilled in the art that, the above components or steps of the present disclosure may be implemented a universal computing device. They may be centralized on a single computing device or distributed on a network composed of multiple computing devices. Alternatively, they may be implemented by a program code executable by a computing device. Therefore, they may be stored in a storage device and executed by the computing device. Or they may be implemented by respectively fabricating them into integrated circuit components, or by fabricating a plurality of components or steps of them into a single integrated circuit component. Therefore, the present disclosure is not limited to any specific combination of hardware and software.

What are described above are only exemplary embodiments of the present disclosure, but are not for use in limiting the present disclosure, and for those skilled in the art, there may be various modifications and changes to the present disclosure. Any modification, equivalent replacement, improvement and the like made within the principles of the present disclosure should be included in the protection scope defined by the appended claims of the present disclosure.

## Claims

1. A method for switching a scene mode, comprising:
receiving a first instruction for instructing a mobile terminal to switch a scene mode of the mobile terminal to a black screen mode, wherein the black screen mode comprises that a display screen is in a black screen state, an audio output is in a muted state, and responses to specific operations to the mobile terminal are shielded, wherein the specific operations comprise all operations except at least one preset operation for switching the scene mode of the mobile terminal from the black screen mode to a non-black screen mode; and
switching the scene mode of the mobile terminal from the non-black screen mode to the black screen mode according to the first instruction.

2. The method as claimed in claim 1, wherein after switching the scene mode of the mobile terminal from the non-black screen mode to the black screen mode, the method further comprises:
receiving a second instruction for instructing the mobile terminal to switch out of the black screen mode; and
judging whether the second instruction is the same as any one of the at least one preset operation for switching the scene mode of the mobile terminal from the black screen mode to the non-black screen mode, and when the second instruction is the same as any one of the at least one preset operation, switching the scene mode of the mobile terminal from the black screen mode to the non-black screen mode.

3. The method as claimed in claim 1, wherein the at least one preset operation for switching the scene mode of the mobile terminal from the black screen mode to the non-black screen mode comprises at least one of the followings:
an instruction inputted by a physical button and/or a touch button of the mobile terminal;
an inductive signal of a specific characteristic, which is received by a sensor of the mobile terminal; and
an incoming call from a preset number, or an incoming message.

4. The method as claimed in claim 3, wherein in a case that the at least one preset operation for switching the scene mode of the mobile terminal from the black screen mode to the non-black screen mode comprises the incoming call from the preset number or the incoming message, the method further comprises:
monitoring an incoming calling and/or message service of the mobile terminal in the black screen mode; and
in a case that the mobile terminal has the incoming call and/or message service, switching the scene mode of the mobile terminal from the black screen mode to the non-black screen mode.

5. The method as claimed in any one of claims 1 to 4, wherein before switching the scene mode of the mobile terminal from the non-black screen mode to the black screen mode, the method further comprises:
storing an original state of the mobile terminal in the non-black screen mode.

6. The method as claimed in claim 5, wherein the original state of the mobile terminal in the non-black screen mode comprises at least one of the followings:
an audio setting in the non-black screen mode; and
a display screen setting in the non-black screen mode.

7. The method as claimed in claim 6, wherein switching the scene mode of the mobile terminal from the black screen mode to the non-black screen mode comprises:
acquiring the original state of the mobile terminal in the non-black screen mode; and
switching the mobile terminal to the original state of the mobile terminal in the non-black screen mode.

8. A device for switching a scene mode, comprising:
a receiving component, configured to receive a first instruction for instructing a mobile terminal to switch a scene mode of the mobile terminal to a black screen mode, wherein the black screen mode comprises that a display screen is in a black screen state, an audio output is in a muted state, and responses to specific operations to the mobile terminal are shielded, wherein the specific operations comprise all operations except at least one preset operation for switching the scene mode of the mobile terminal from the black screen mode to a non-black screen mode; and
a switching component, configured to switch the scene mode of the mobile terminal from the non-black screen mode to the black screen mode according to the first instruction.

9. The device as claimed in claim 8, further comprising:
a monitoring component, configured to monitor an incoming calling and/or message service of the mobile terminal in the black screen mode; and
a second switching component configured to, in a case that the mobile terminal has the incoming call and/or message service, switch the scene mode of the mobile terminal from the black screen mode to the non-black screen mode.

10. A mobile terminal, comprising:
a black screen mode which is set in a scene mode of the mobile terminal, wherein the black screen mode comprises that: a display screen is in a black screen state, an audio output is in a muted state, and responses to specific operations to the mobile terminal are shielded, wherein the specific operations comprise all operations except at least one preset operation for switching the scene mode of the mobile terminal from the black screen mode to a non-black screen mode.
